Europäisches Patentamt

European Patent Office

Office européen des brevets

(11) Publication number: **0 381 525**
**A2**

# EUROPEAN PATENT APPLICATION

(21) Application number: 90301132.8

(51) Int. Cl.5: **B29C 71/04, C08J 9/00**

(22) Date of filing: 02.02.90

(30) Priority: 02.02.89 US 305951

(43) Date of publication of application:
08.08.90 Bulletin 90/32

(84) Designated Contracting States:
AT BE CH DE DK ES FR GB GR IT LI LU NL SE

(71) Applicant: **Ogmen, Melih**
**4 Assiniboine Road, No. 1001 Downsview**
**Ontario, M3J 1L2(CA)**

Applicant: **Duley, Walter W.**
**99 McClure Drive, P.O. Box 453**
**King City Ontario L0G 1K0(CA)**

(72) Inventor: **Ogmen, Melih**
**4 Assiniboine Road, No. 1001 Downsview**
**Ontario, M3J 1L2(CA)**
Inventor: **Duley, Walter W.**
**99 McClure Drive, P.O. Box 453**
**King City Ontario L0G 1K0(CA)**

(74) Representative: **Myerscough, Philip Boyd et al**
**J.A.Kemp & Co. 14, South Square Gray's Inn**
**London, WC1R 5EU(GB)**

(54) Process for producing microcapillaries on plastic surface.

(57) A process for producing micro-capillaries on a plastic surface comprises directing a pulsed laser radiation beam onto a focal area of the plastic surface. The beam comprises photons having an energy greater than about 3.5 eV, possesses a fluence in the range of from about 400 to about 1500 mJ/cm$^{-2}$ and is pulsed at a frequency of from about 50 to about 100 Hz. The plastic surface and the radiation beam are translated relative to one another in a manner whereby the focal area is exposed to from about 100 to about 200 pulses of the beam for a temporal pulse duration of from about 10 to about 40 nsec.

## PROCESS FOR PRODUCING MICROCAPILLARIES ON PLASTIC SURFACE

### TECHNICAL FIELD

The present invention relates to a process for producing micro-capillaries on a plastic surface.

### BACKGROUND ART

It is known that when a liquid and a solid surface are in contact with one another, there exists a free interfacial energy between them. The interfacial energy arises from the difference between the inward attraction of the molecules in the interior of each substance and the inward attraction of the molecules at the contacting surface of each substance. Since a surface possessing free energy will tend to contact if possible, the interfacial free energy manifests itself generally as what is known as interfacial tension. The interfacial tension is defined as the amount of work that must be performed in order to separate a unit area of solid from the liquid with which it is in contact. In a dynamic system where the solid and liquid are in a state of motion with respect to each other, the interfacial tension becomes the dominant factor affecting the overall system energy efficiency.

Heretofore, attempts have been made using various techniques to reduce the interfacial tension in a solid-liquid interface. Thus, it is known to reduce interfacial tension by using chemical surfactants and wetting agents. In the case of a dynamics solid-liquid interface, it is known to form capillaries on the surface of the solid. The existing pressure and the natural capillary action of these modified surfaces moves the liquid into the capillaries. Once the capillaries are saturated, the liquid contained therein cannot move at the same speed as the bulk of the liquid. This phenomenon results in movement of the solid relative to the bulk liquid via contacting surfaces of the bulk liquid and the liquid contained in the capillaries of the solid. Thus, contact between the solid surface and the bulk liquid is reduced substantially or even eliminated completely, thereby alleviating the interfacial tension which exists in the system.

Further, known processes to form micro-capillaries on surfaces include various mechanical techniques such as scratching and roughening.

It would be desirable to have a novel system of producing micro-capillaries on the surface of a solid.

It is an object of the present invention to provide a novel process for producing micro-capillaries on a plastic surface.

Accordingly, the present invention provides a process for producing micro-capillaries on a plastic surface which comprises directing a pulsed laser radiation beam onto a focal area of the plastic surface;
wherein (i) the radiation beam comprises photons having an energy greater than about 3.5 eV; (ii) the radiation beam has a fluence in the range of from about 400 to about 1500 mJ/cm$^{-2}$; (iii) the radiation beam is pulsed at a frequency of from about 50 to about 100 Hz; (iv) the plastic surface and the beam are translated relative to one another in a manner whereby the focal area is exposed to from about 100 to about 200 pulses of the beam for a temporal pulse duration of from about 10 to about 40 nsec.

### BRIEF DESCRIPTION OF THE DRAWINGS

Embodiments of the present invention will now be described by way of example only with reference to the accompanying drawings in which:

Figure 1a is a scanning electron microscope photograph (magnification 150X) of an untreated surface of polyethylene;

Figure 1b is a scanning electron microscope photograph (magnification 1500X) of an untreated surface of polyethylene;

Figure 2 is a scanning electron microscope photograph (magnification 80X) of a surface of polyethylene on which a pulsed laser ultraviolet radiation laser has been directed;

Figure 3 is a scanning electron microscope photograph (magnification 160X) of the outlined section of Figure 2;

Figure 4 is a scanning electron microscope photograph (magnification 100X) of a plastic surface on which a pulsed laser ultraviolet radiation laser has been directed;

Figure 5 is a scanning electron microscope photograph (magnification 500X) of the outlined section of Figure 4;

Figure 6 is a perspective view of one embodiment of the process of the present invention in operation; and

Figure 7 is a perspective view of another embodiment of the process of the present invention in operation.

### DISCLOSURE OF THE INVENTION

### BEST MODE FOR CARRYING OUT THE INVENTION

The process of the present invention may be used to form micro-capillaries on a plastic surface. For the purposes of the present invention a plastic surface may be defined as a surface of material which is a long chain polymer capable of being formed as a thin sheet, a hard and moldable solid or a coating. Non-limiting examples of suitable long chain polymers include polyethylene, polypropylene, polytetrafluoroethylene and polystyrene. The preferred long chain polymer suitable for use as the plastic surface of the present process is polyethylene.

The laser processing technique which forms part of the present process offers a degree of control over the shape and size of the processed area through the choice of an appropriate focusing assembly. The pulsed laser radiation beam may by directed and focused onto the plastic surface by utilizing suitable optical components which are transmissive, reflective or a combination thereof. The various components of the focusing assembly together determine the geometrical shape of the processed area.

It has been determined that the overall effect of the laser radiation beam on the plastic surface is a strong function of the laser frequency, fluence and photon energy. Moreover, the total energy imparted on the unit area of the plastic surface is inversely proportional to the size of the focal area. Thus, the variety of physical and chemical changes induced on the plastic surface can be controlled effectively by choosing the appropriate components for the focusing assembly.

In a preferred embodiment of the present invention, the focusing assembly comprises a window which is transparent to the laser radiation beam and a focusing element. Thus, the radiation beam passes through the window and is focused onto the plastic surface by the focusing element. Such a focusing assembly is suitable for use with plastic surfaces which are planar.

In another preferred embodiment of the present invention, the focusing assembly further comprises a mirror disposed therein. The mirror is capable of reflecting the radiation beam. Thus, the radiation beam passes through the window and is redirected by the mirror to the focusing element which focuses the beam onto the plastic surface. Alternatively, the beam may pass through the window and focusing element, and then be redirected onto the plastic surface. The position of the mirror in the focusing assembly with respect to the window and the lens is not believed to be critical. Such a focusing assembly is suitable for use with a plastic surface which is the inner surface of a cylinder. An example of such a plastic surface is in the inner surface of a pipe.

The preferred focusing element suitable for use in the focusing assembly is a lens.

The type of laser suitable for use in the process of the present invention is not particularly restricted. Rather, the energy of the photons produced by the laser is important. For the purpose of the present invention, the energy of the photons produced by the laser must greater then 3.5 eV, preferably greater than 4 eV. Thus, the energy of the photons produced by the laser is more important than the type of laser used. Since the output frequency of a laser can be doubled or tripled (eg. the energy of the photons produced can be increased) by techniques known in the art, a laser which normally has an output of electromagnetic radiation in the visible region can be used effectively in the process of the present invention if the output frequency of the laser is doubled or tripled to produce ultraviolet radiation wavelengths. For example, if a Nd:YAG laser outputs electromagnetic radiation having a wavelength of 1064 nm and the frequency of the laser radiation is then tripled, the wavelength becomes 355 nm which is suitable for use in the process of the present invention.

The wavelength of the pulsed laser radiation beam is not particularly restricted. Preferably, a laser emitting radiation in one of the ultraviolet or infrared regions is used in the process of the present invention. More preferably, a laser emitting ultraviolet radiation is used in the process of the present invention. Preferably, the radiation beam has a wavelength of from about 240 to about 354 nm, more preferably from about 240 to about 308 nm.

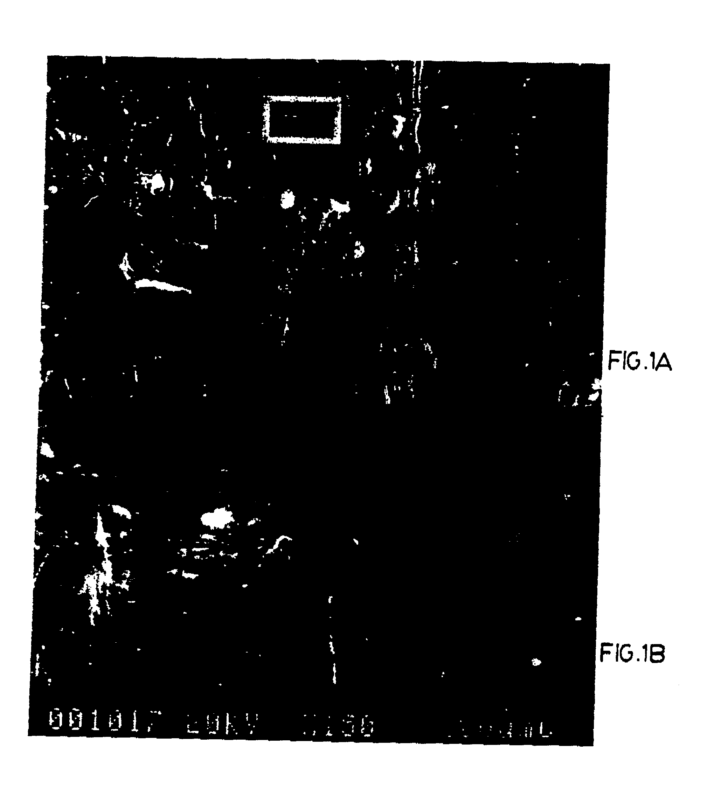

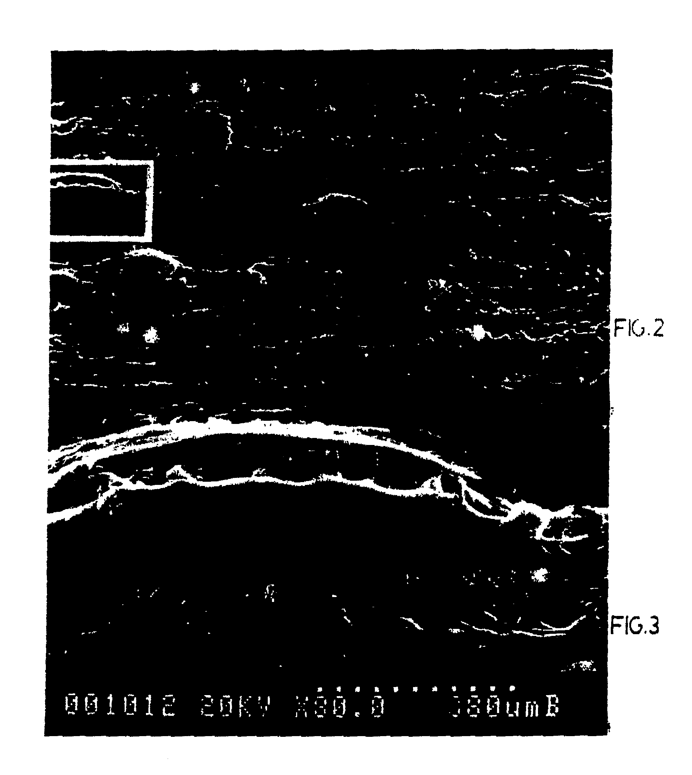

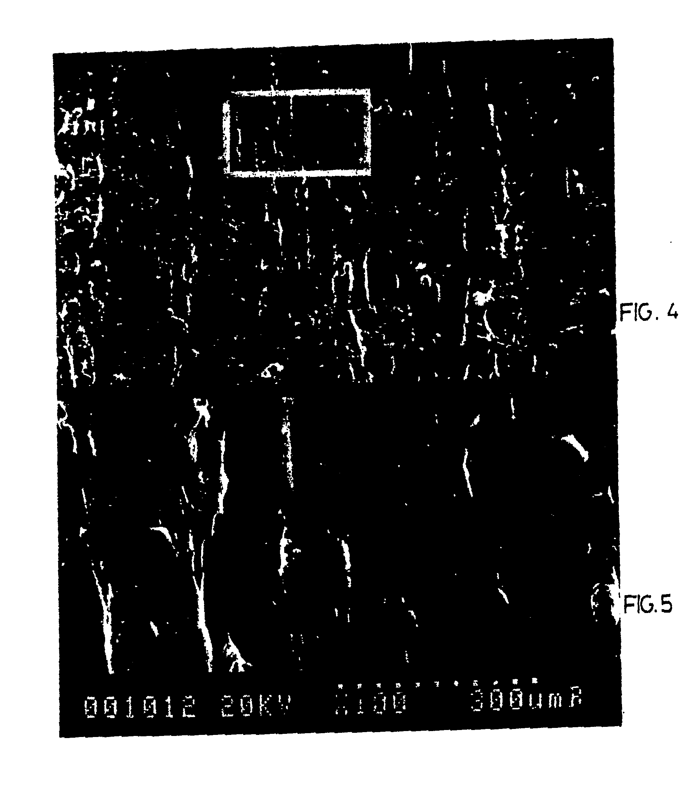

If the laser radiation beam is of high fluence, for example 1.5 to 2.0 $J/cm^2$, the effect of a single short duration pulse (e.g 10 to 30 nsec) from an ultraviolet laser on the plastic surface is direct evaporation of the irradiated area without melting and subsequent heat transfer to the surrounding region of the material. If, however, the laser radiation beam is of relatively low fluence with multiple pulse exposures on the irradiated plastic surface, the dominating effects relevant to the process are: i) the indirect heating of the material, which occurs due to an electron-hole recombination process and phonon generation from electronic transitions, and ii) repetitive shock waves which accompany each pulse. Indirect heating of the plastics causes a uniform temperature increase within the bulk of the material. It has been discovered that the combined effect of uniform heating, high photon energies and high pressures occurring during each shock wave results in the plastic surface undergoing transient melting and chemical bond breaking which in turn causes formation of micro-gas pockets within the plastic material - these are illustrated in Figures 2 and 3. Further shock waves effectively rupture these gas pockets and redistribute them along the shock front resulting in the formation of directional micro-capillary surface structures -these are illustrated in Figures 4 and 5. Figures 1a and 1b, which are included for comparative purposes only, illustrate scanning electron microscope photographs of an untreated surface of polyethylene.

By contrast, direct heating of plastics involves absorption of photons in the infrared range of the electromagnetic spectrum (as opposed to ultraviolet photons). A characteristic element of direct heating is the non-uniform temperature distribution created within the material.

For the purposes of the present invention, the fluence level of the pulsed laser radiation beam is preferably in the range of from about 400 to about 1500 mJ/cm2, more preferably in the range of from about 800 to about 900 mJ/cm². Such a fluence regime should be accompanied by from about 100 to about 200 pulses of radiation on a given focal area at a laser frequency of from about 50 to about 100 Hz.

As the plastic surface and the radiation beam are translated relative to one another, an area (ie. the focal area) containing micro-capillary structures will be formed on the plastic surface. The shape and the directionality of the resultant micro-capillary structures can be controlled effectively by: i) choosing the appropriate focusing assembly, and ii) the positioning of the final focusing element (eg. a lens) with respect to the movement direction of the plastic surface.

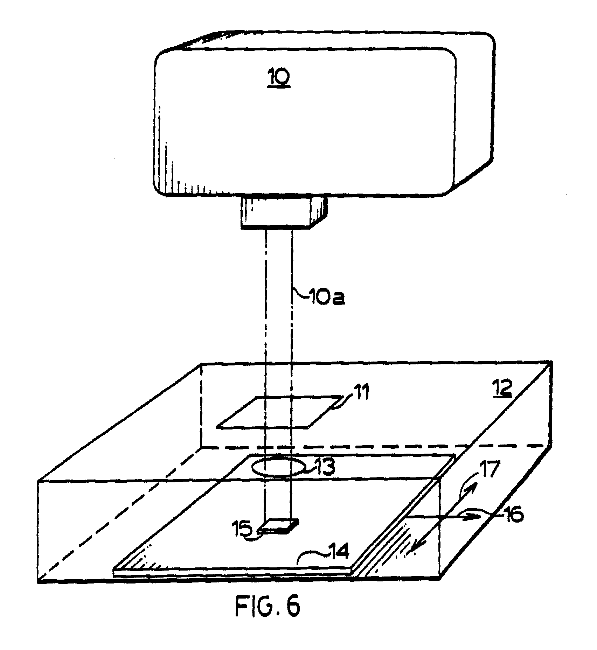

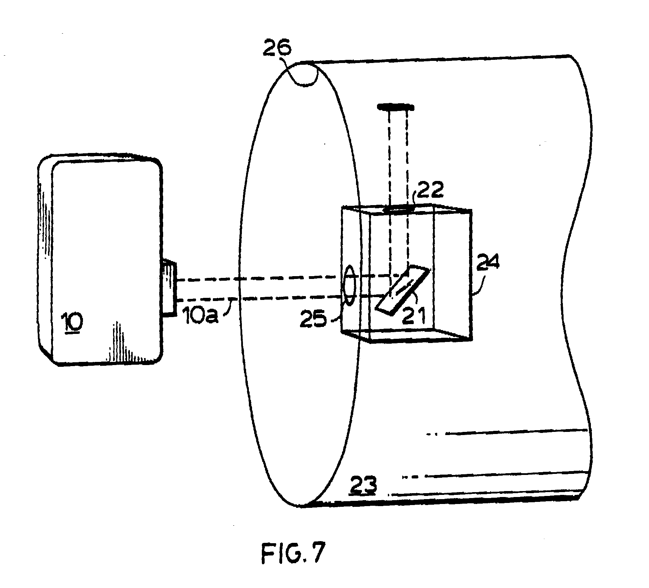

Reference will now be made to Figures 6 and 7, wherein like reference numerals refer to like parts. Referring to Figure 6, there is illustrated a perspective view of one embodiment of the process of the present invention in operation. Specifically, a pulsed laser ultraviolet radiation beam 10a is transmitted from a laser 10 through a window 11 in a container 12. Radiation beam 10a is thereafter focused by a plano convex cylindrical lens 13 onto a focal area 15 of a plastic surface 14. The directionality of focal area 15 is determined by the positioning angle between the focusing plane of lens 13 and the direction of motion of plastic surface 14. The relative motion of radiation beam 10a with respect to plastic surface 14 is achieved by translation of plastic surface 14 in the direction of either of arrows 16 or 17. Alternatively, the relative motion may be achieved by translating laser 10, container 12 and lens 13 with respect to plastic surface 14.

In operation, plastic surface 14 and lens 13 are disposed to ensure the desired directionality of the surface micro-capillaries. The speed of translation and the frequency of radiation beam 10a are adjusted to provide the required number of pulse exposures to focal area 15. The atmosphere within container 12 may be chosen to enhance or inhibit the occurrence of chemical reactions therein. For example, by utilizing a chemically inert atmosphere (eg. N$_2$, Ar), a higher rate of cross-linking of the plastic surface may be achieved through prevention of oxidation. Moreover, container 12 may be filled with a liquid which will enhance the effect of the shock waves produced within plastic surface 14 after each pulse of radiation beam 10a. Water is a suitable example of such a liquid. Generally, any liquid which is transparent to the radiation of beam 10a can be effectively used to enhance the effect of the shock waves produced within the plastic surface.

Referring now to Figure 7, there is illustrated a perspective view of another embodiment of the process of the present invention in operation. This embodiment is suitable for use with cylindrical materials comprising plastic inner surfaces. A pulsed laser ultraviolet radiation beam 10a is transmitted from a laser 10 through a window 25 in a container 24. Radiation beam 10a then strikes and is redirected by mirror 21 through cylindrical focusing lens 22 onto a focal area 27 of an inner plastic surface 26 which forms part of a cylindrical tube 23. Container 24 comprising window 25, mirror 21 and lens 22 is disposed within cylindrical tube 23 such that the pivot point of mirror 21 is coincident with the longitudinal axis of cylindrical tube 23. the relative motion of radiation beam 10a with respect to inner plastic surface 26 may be achieved by translation of cylindrical tube 23 in the direction of arrow 28. Alternatively, the relative motion may be achieved by translating laser 10 and container 24 along the longitudinal axis of cylindrical tube 23.

In operation, inner plastic surface 26 and lens 22 are disposed to ensure the desired directionality of the surface micro-capillaries. The speed of translation and the frequency of radiation beam 10a are adjusted to provide the required number of pulse exposures to focal region 27.

The product of the process of the present invention is a plastic surface comprising micro-capillaries. Applicants believe that such a product may find use in the following applications which are not intended to be limiting: ski surfaces; water going vessels such as submarines, yachts, torpedoes; and pipelines such as oil and water pipelines.

## Claims

1. A process for producing micro-capillaries on a plastic surface which comprises directing a pulsed laser radiation beam onto a focal area of said plastic surface;
wherein (i) said radiation beam comprises photons having an energy greater than about 3.5 eV; (ii) said radiation beam has a fluence in the range of from about 400 to about 1500 mJ/cm$^{-2}$; said radiation beam is pulsed at frequency of from about 50 to about 100 Hz; and (iv) said plastic surface and said beam are translated relative to one another in a manner whereby said focal area is exposed to from about 100 to about 200 pulses of said beam for a temporal pulse duration of from about 10 to about 40 nsec.

2. The process of claim 1, wherein said beam is directed into a focusing assembly prior to contacting said surface.

3. The process of claim 2, wherein said beam passes through a window disposed in said assembly and thereafter is focused by a lens onto said plastic surface.

4. The process of claim 3, wherein said plastic surface is planar.

5. The process of claim 3, wherein said assembly further comprises a mirror disposed whereby said beam is redirected;
wherein said mirror is capable of reflecting said beam.

6. The process of claim 5, wherein said plastic surface is the inner surface of a cylinder.

7. The process of claim 6, wherein said cylinder comprises a pipe.

8. The process of claim 1, wherein said plastic surface is polyethylene.

9. The process of claim 1, wherein said radiation beam has a wavelength of from about 240 to about 354 nm.

10. The process of claim 1, wherein said radiation beam has a wavelength of from about 240 to about 308 nm.

11. The process of claim 1, wherein said radiation beam comprises photons having an energy greater than about 4 eV.

12. The process of claim 1, wherein said radiation beam comprises a fluence level of from about 800 to about 900 mJ/cm$^{-2}$.

FIG.1A

FIG.1B

FIG.2

FIG.3

FIG. 4

FIG. 5

FIG. 6

FIG. 7